# EUROPEAN PATENT SPECIFICATION

(11) **EP 3 784 749 B1**
(45) Date of publication and mention of the grant of the patent: **30.11.2022**
(21) Application number: 19728762.6
(22) Date of filing: 22.04.2019
(51) Int. Cl.: C09K 11/65, H05B 33/10, H05B 33/18, B01J 23/34, B01J 23/74, C01B 32/26

(54) **LUMINESCENT DIAMOND MATERIAL AND METHOD OF PRODUCING THE SAME**
LUMINESZENTES DIAMANTMATERIAL UND VERFAHREN ZUR HERSTELLUNG DAVON
MATÉRIAU LUMINESCENT DE DIAMANT ET PROCÉDÉ POUR SA FABRICATION

(30) Priority: 24.04.2018 US 201862661813 P
(43) Date of publication of application: 03.03.2021
(73) Proprietor: Diamond Innovations, Inc., Worthington OH 45085 (US)
(72) Inventor: DALIS, Adamos, Worthington, OH 43085 (US); VAGARALI, Suresh, Shankarappa, Columbus, OH 43235 (US)
(74) Representative: Neilson, Martin Mark
(86) International application number: PCT/US2019/028494
(87) International publication number: WO 2019/209702

(56) References cited:
- EP-A1- 0 346 794
- EP-B1- 0 346 794
- WO-A1-2016/144256
- WO-A2-2006/136929
- WO-A2-2007/081492
- GB-A- 2 543 032
- US-A1- 2010 126 406
- TÓTH S ET AL: "Creation of near-infrared emitting optical center related to nickel-silicon impurity complex in nanodiamond grains", JOURNAL OF LUMINESCENCE, ELSEVIER BV NORTH-HOLLAND, NL, vol. 176, 13 April 2016 (2016-04-13), pages 367-371, XP029535053, ISSN: 0022-2313, DOI: 10.1016/J.JLUMIN.2016.04.015

## Description

### TECHNICAL FIELD

The present disclosure relates to a luminescent diamond material or particles and a method of making the same using a high pressure, high temperature (HTHP) process to produce the same.

### BACKGROUND

Impurities and point defects found in diamond crystals or particles create optical, magnetic and electrical properties that can be useful in practical applications. For example, please see Schirhagl et al. (https://doi.org/10.1146/annurev-physchem-040513-103659). Fluorescent point defects (NV centers make the diamond fluorescent) in synthetic diamond material have been proposed for use in such various sensing and detecting applications that demand bright fluorescence from small nano-sized diamond particles, for example, fluorescent markers and labels in medical diagnosis and other biological applications. For example, please see US Patent No. 8,932,554, US Patent Application Publication No. 2018/0080145 and WO 2007/081492.

However, such nano-particles often have too low a concentration of vacancy centers, such as nitrogen vacancy defects or silicon vacancy defects, which is not ideal for many fluorescent marker applications.

For example, to increase the concentration, synthetic type lb diamonds containing nitrogen made by high pressure high temperature (HPHT) method can be made fluorescent by electron irradiation followed by annealing. The electron irradiation creates vacancies which migrate during annealing and can pair with nitrogen atoms in the diamond lattice and form NV centers.

The cost of irradiation is high particularly for higher doses of radiation required to create high concentration of vacancies. In general, synthetic diamond made by conventional HPHT method is not very fluorescent. In order to make them fluorescent, they will have to be irradiated with much higher dosage levels, which makes the process very expensive.

Thus, there is a need to provide diamond particles, especially nano-sized diamond particles, with a high concentration of luminescent point defects and thus, for example, a high fluorescent intensity.

### SUMMARY

To overcome the above disadvantages, the present disclosure is directed to a luminescent diamond material comprising a plurality of diamond particles having at least one first defect center that luminesces at a wavelength of 880 nm to 890 nm and energy of 1.41 eV to 1.39 eV; wherein the at least one first defect center is selected from at least one of cobalt germanium, nickel, nitrogen and silicon; wherein the plurality of diamond particles have a second defect center that luminesces at peak wavelength of 510 nm to 520 nm and energy of 2.43 eV to 2.38 eV.

The at least one defect center photoluminesces when excited with a visible, ultraviolet, or infrared light.

According to another aspect, the luminescent diamond material includes a luminescent enhancer.

The luminescent enhancer is optionally selected from boron, germanium, phosphorous, silicon and tin.

The size of the diamond particles is less than about 100 nm. The diamond particles have a size of optionally of about 1 nm to about 20 nm; of about 20 nm to about 100 nm; of about 0.1 µm to about 1 µm; of about 500 nm to about 30 µm; or of about 10 µm to 100 µm.

As an option, the diamond particles have a plurality of defect centers, wherein a density or concentration of the defect centers is more than about 8 ppm.

The material is made from a composition of material that optionally includes a catalyst composition selected from one or more of the group of cobalt, iron, manganese and nickel; an enhancer selected from one or more of the group of boron, germanium, phosphorous, silicon and tin.

According to another aspect, a method of producing a luminescent diamond material comprising the steps: of providing a catalyst selected from one or more of the group of cobalt, iron, manganese and nickel; providing an enhancer selected from one or more of the group of boron, germanium, phosphorous, silicon and tin; providing graphite; blending the catalyst, enhancer and graphite to form a homogenized blend and pressing the homogenized blend into a solid compact; and subjecting the solid compact to a high pressure process to form a luminescent diamond material luminesces at 880 nm to 890nm nm or energy of about 1.41 eV to about 1.39 eV; wherein the at least one first defect center is selected from at least one cobalt germanium, nickel, nitrogen and silicon; wherein the plurality of diamond particles have a second defect center that luminesces at peak wavelength of 510 nm to 520 nm and energy of 2.43 eV to 2.38 eV .

The plurality of defect centers is photoluminesced when excited with an ultraviolet, visible or infrared light.

The catalyst, enhancer and graphite are powders and the step of blending includes blending the powders together to form a homogenized powder blend.

The powder blend can be subjected to a pressure of about 4.5 GPa to about 8 GPa and a temperature of about 1200 °C to about 2300 °C.

The foregoing summary, as well as the following detailed description of the embodiments, will be better understood when read in conjunction with the appended drawings. It should be understood that the embodiments depicted are not limited to the precise arrangements and instrumentalities shown.

### BRIEF DESCRIPTION OF THE DRAWINGS

Fig. 1 is a flow chart of one embodiment of the method according to the present disclosure.
Fig. 2 illustrates the emission spectra of the NV, SiV centers and a peak measured from the luminescent diamond material made according to the method of Fig. 1.
Fig. 3 is another emission spectra of an 885 nm peak of the luminescent diamond material made according to the method of Fig. 1.
Fig.4 illustrates the green fluorescence emission spectra when the luminescent diamond material of the present disclosure.
Fig. 5 illustrates the 885 nm (IR) vs 514 nm (Green) comparison for various diamond samples.

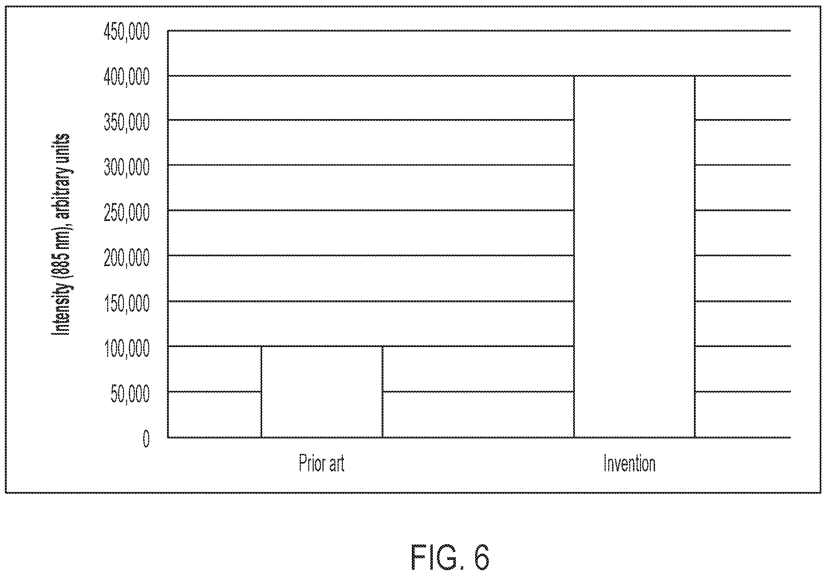

Fig. 6 illustrates the luminescence intensity of diamond material made according to the method of Fig. 1 compared to prior art.

### DETAILED DESCRIPTION

Before the present materials, compositions, methods are described, it is to be understood that this disclosure is not limited to the particular methodologies, systems and materials described, as these may vary. It is also to be understood that the terminology used in the description is for the purpose of describing the particular versions or embodiments only, and is not intended to limit the scope. For example, as used herein, the singular forms "a," "an," and "the" include plural references unless the context clearly dictates otherwise. In addition, the word "comprising" as used herein is intended to mean "including but not limited to"; however, it will be understood by one of skill in the art, that in some instances, an embodiment can alternatively be described using the language "consisting essentially of or "consisting of." Unless defined otherwise, all technical and scientific terms used herein have the same meanings as commonly understood by one of ordinary skill in the art.

Unless otherwise indicated, all numbers expressing quantities of ingredients, properties such as size, weight, reaction conditions and so forth used in the specification and claims are to be understood as being modified in all instances by the term "about". Accordingly, unless indicated to the contrary, the numerical parameters set forth in the following specification and attached claims are approximations that may vary depending upon the desired properties sought to be obtained by the invention. At the very least, and not as an attempt to limit the application of the doctrine of equivalents to the scope of the claims, each numerical parameter should at least be construed in light of the number of reported significant digits and by applying ordinary rounding techniques.

As used herein, the term "about" means plus or minus 10% of the numerical value of the number with which it is being used. Therefore, about 50% means in the range of 45%-55%. When the term, "luminesce(s)" is used it should be understood to encompass photolumineses, fluorescence and/or any other illumination due to excitation from various energy sources, including light, but not limited to the latter.

As used herein the term "luminescent nano-diamond material" means diamond particles having a mean size of less than 100 nm (nano-size) and containing defects within the crystalline structure that luminesces when excited by certain wavelengths of energy.

As used herein the term "vacancy" means a defect caused by an atom missing from a lattice structure. "NV" means a nitrogen vacancy center. "SiV" refers to a silicon vacancy center. The nickel defect center has been referred to as an "NIRIM2" center in prior art (https://doi.org/10.1103/PhysRevB.70.245206 and PHYSICAL REVIEW B VOLUME 42, NUMBER 16 1 DECEMBER 1990, p 9843).

As used herein the term "enhancer" means an element introduced into the crystal lattice during the growth process that has been shown to increase the bulk fluorescence of the diamond crystal.

Luminescent diamond material or particles have numerous uses for biomedical imaging, for example, as contrast agents for in-vitro and in vivo analyses, diagnostic, drug discovery and R&D. The diamond surface can be functionalized for drug delivery - attaching drugs/compounds to diamond surface to target specific sites, Also, the luminescent diamond can be used as quantum dots for potential use in quantum computing.

Diamond is ideal for biomedical applications due to its biocompatibility and vacancy centers that fluoresce or luminesce, such luminescence being stable over long time periods.

These characteristics are caused by vacancies or point defects in the crystal lattice. The vacancies or defects are introduced by irradiating the diamond, for example, by an electron beam, to generate a lattice defect. As will be described further herein, the lattice defect can be combined with different elements to cause the diamond to luminesce.

One way to increase luminescence of the diamond and reduce the cost is to press the diamond in a manner that can grow the diamonds at a faster growth rate at a higher temperature. Higher growth temperature will result in increased concentration of vacancies, which will then migrate and combine with the atoms of the elements to form, for example, the NV and SiV. Such diamond will have higher fluorescence out of the press.

As will be disclosed further herein the high pressure and high temperature (HPHT) process HPHT method is used to grow large quantity of micron and/or mesh diamond particles/crystals that can further be processed to produce nanosize diamond crystals. Furthermore, certain catalyst compositions and process conditions identified herein, significantly increase the fluorescence intensity of the resulting diamond crystals over the fluorescence of diamond crystals produced using catalyst compositions and known process conditions.

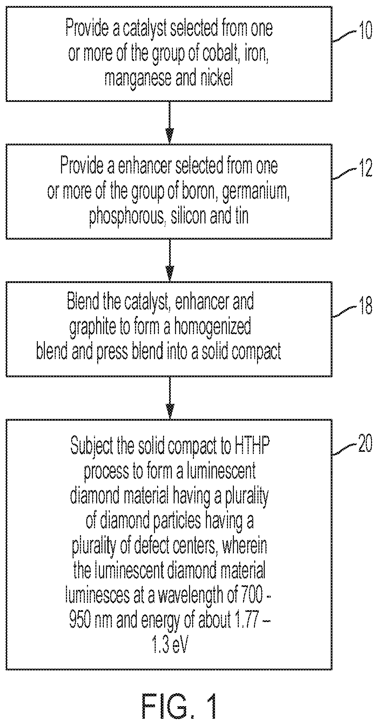

Fig. 1 illustrates the steps used to make micron or mesh size diamond crystals that possess bright infra-red and green fluorescence even at room temperature. As will be described fully herein, the infra-red fluorescence emission peaks at a wavelength of around 885nm (due to a red or infra-red excitation), while the green fluorescence emission peaks at a wavelength of 514nm (due to a blue excitation). In one embodiment, the fluorescence is due to incorporation of certain nickel based color centers into the diamond lattice during the crystal growth process. The fluorescence is maintained when the micron or mesh crystals are nanosized down to 400nm or smaller (e.g. by a milling process).

Luminescent diamond material with bright infra-red fluorescence can be used in (i) biomedical applications as deep tissue tracers of biomolecules, (ii) anti-counterfeiting as covert and concealed features. The combination of two sharp emission peaks (green at 514nm and infra-red at 885nm) in the same diamond population, makes the diamond crystals described here ideal for use as photostable (non-bleaching) fluorescence calibration standards that span the green to the infra-red light range.

Referring again to Fig. 1, the method of producing a luminescent diamond material includes the steps of:
- providing a catalyst selected from one or more of the group of cobalt, iron, manganese and nickel;
- providing an enhancer selected from one or more of the group of boron, germanium, phosphorous, silicon and tin;
- providing graphite powder;
- blending the catalyst, enhancer and graphite to form a homogenized blend and pressing the homogenized blend into the form of a dense compact, and
- subjecting the dense compact to a high temperature, high pressure process to form a luminescent diamond material having a plurality of diamond particles having a plurality of defect centers, wherein the luminescent diamond material luminesces at about 700 nm to about 950 nm and about 1.77 eV to about 1.30 eV.

Steps 10-18 describe the process to produce the catalyst/graphite/seed diamond cores that will be subject to the HTHP process. In step 10, a catalyst selected from at least one of the group of cobalt, iron, manganese and nickel is provided. The catalyst enables the transformation of graphite to diamond under high pressure and temperature conditions.

In step 12, additional components selected from one or more of the group of boron, germanium, phosphorous, silicon and tin is provided that may act as a luminescent enhancer. It is thought that atoms from one or more of the enhancer elements may become trapped within the diamond lattice in the proximity of the defect center. This phenomenon may alter the electronic state of the defect center such that it increases its luminescence.

In step 16, graphite powder is provided. Graphite is the source of carbon from which the diamond is formed. The catalyst, enhancer and graphite are blended to form a homogenized blend. The catalyst, enhancer and graphite can be powders that are blended together to form a homogenized powder blend.

The powder blend can be pressed into a solid compact and then subjected to the HPHT process.

The HTHP process is described in reference to step 20, wherein the homogenized and compacted blend is subjected to a high temperature, high pressure process to form a luminescent diamond material having a plurality of diamond particles having a plurality of defect centers, wherein the luminescent diamond material luminesces at a wavelength of about 700 nm to about 950 nm or about 1.77 eV to about 1.30 eV.

The above method includes simultaneously converting graphite to diamond and incorporating defect centers into the diamond in such a way which causes the material to luminesce. The mixture, once pressed in the form of the dense compact can be subjected to HPHT treatment at pressures in excess of 3 GPa and temperatures in excess of 1000° C. For example, a pressure of about 4.5 GPa to about 8 GPa and a temperature of about 1200 °C to about 2300°C.

Thus, during the HPHT process, the graphite will convert to diamond which may simultaneously incorporate defects. The concentration of defects may be controlled by varying the blend composition. It may be possible to grow diamond with multiple defects.

The luminescent diamond material is made from a composition of material that optionally includes a catalyst composition selected from one or more of the group of cobalt, iron, manganese and nickel; an enhancer selected from one or more of the group of boron, germanium, phosphorous, silicon and tin.

The luminescent diamond material can be made of a composition of material including in wt % of about 50 to about 70 of the catalyst, of about 2 to about 20 of the enhancer, and of about 20 to about 40 of graphite powder. More specifically, of about 50 to about 70 nickel, of about 3 to about 20 enhancer, and of about 20 to about 40 graphite.

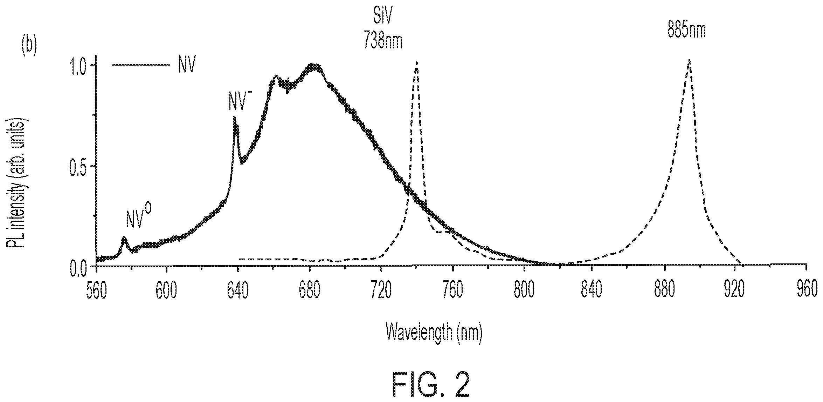

The nitrogen vacancy center NV of Figs 2 is the most common color center in diamond. Referring to Fig. 2, fluorescence is broad, however, autofluorescence can interfere with brightness. Irradiation and annealing can create more NV centers.

The silicon vacancy center shown in Fig. 2 is not common in diamond. However, it can be developed through HPHT as described herein. Moreover, irradiation is not needed to create defects. As shown in Fig. 2, the SiV center has a narrow fluorescence peak that is sharp and distinct above background fluorescence.

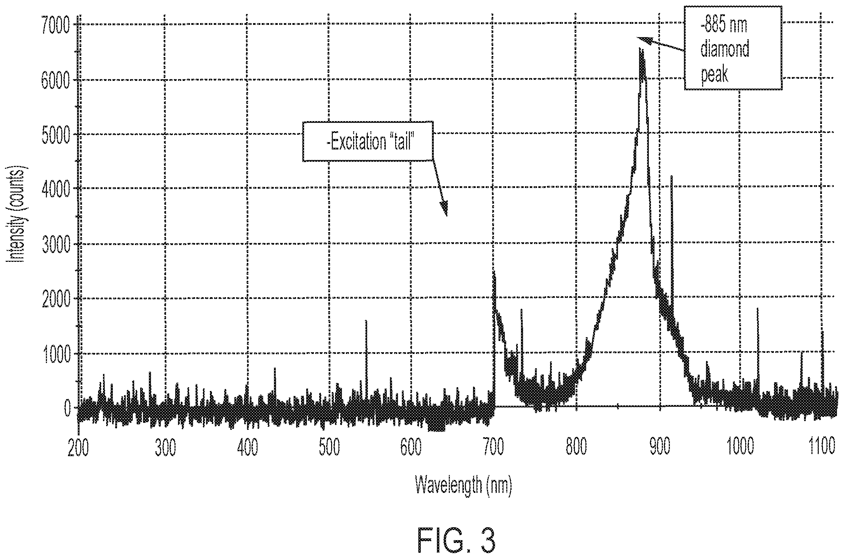

The resulting luminescent material includes a plurality of diamond particles having at least one defect center that luminesces at about 700 nm to about 950 nm or about 1.77 to about 1.30 eV. The presence of the defect centers have been verified using photoluminescence spectroscopy as shown in Fig. 3 where the diamond was excited with a 660nm light source and it luminesced with a peak between 880 nm to 890nm or about 1.41 eV to about 1.39 eV. The level of defect centers have been further quantified using Electron Spin Resonance (ESR) or Electron Paramagnetic Resonance (EPR) techniques.

When at least one of these defect centers is excited with a visible, UV, or infrared light it photolumineses and with spectroscopy data collected at room temperature, it is shown that the at least one defect center luminesces at about 800 nm to about 900 nm, at about 775 nm to about 925 nm and/or at about 880 nm to about 890 nm.

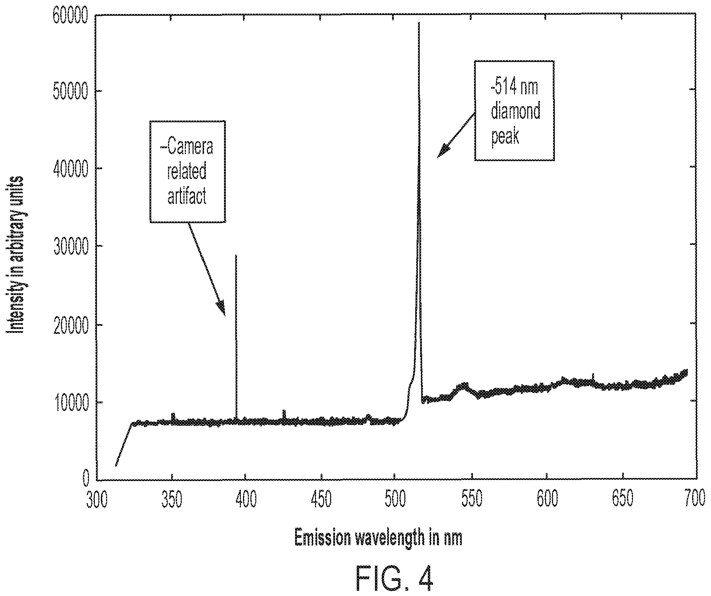

Further, when the luminescent diamond of Example 1 is excited with a blue light source of 450nm, a 514nm peak is observed as shown in Fig. 4. Therefore, the luminescent diamond material can have at least one first defect center that luminesces at about 880 nm to 890 nm and about 1.41 eV to about 1.39 eV and at least one second defect center that luminesces at about 510 nm to 520 nm and about 2.43eV to about 2.38eV.

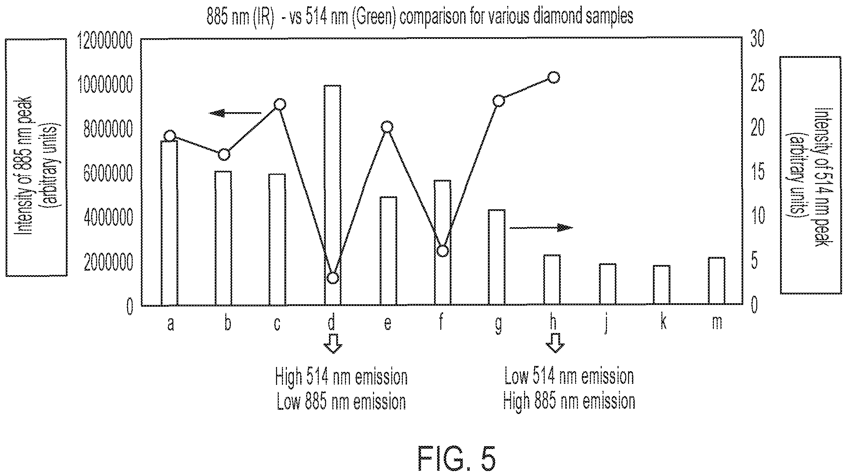

In another embodiment it has been shown that it is possible to manipulate the relative intensity of the 885nm peak and the 514nm peak within the luminescent diamond. For example, as shown in Fig. 5, sample h was produced using the method described in Example 1 where both the 885nm and 514nm peaks are present when excited with the appropriate light sources. However, by eliminating the enhancer addition from the blend used in Example 1, the diamond produced from this composition resulted in sample d. The 885nm peak in sample d is suppressed while the luminescent intensity of the 514nm peak is enhanced.

The resulting luminescent diamond material can be processed into a luminescent nanodiamond having diamond particles less than of about 100nm using methods known in the industry. The diamond particles can have a size of about 1 nm to about 20 nm; of about 20 nm to about 100 nm; of about 0.1 µm to about 1 µm; of about 500 nm to about 30 µm; and/or about 10 µm to about 100 µm. It should be appreciated that other nanosize particles are contemplated.

Due to the above, the density or concentration of the defect centers is increased, as described further herein, to more than about 8 ppm.

Accordingly, the method of the present disclosure is a process for making fluorescent diamonds. The technique can make fluorescent diamonds which fluoresce in the infrared region of the electromagnetic spectrum. This method has also been used to make luminescent diamond in large-scale quantities on the order of 8 grams per pressed run.

Another benefit of the method of producing the luminescent diamond of this invention as set forth supra, is that no irradiation is necessary for creating the defect centers.

The present subject matter being thus described, it will be apparent that the same may be modified or varied in many ways. Such modifications and variations are not to be regarded as a departure from the scope of the present subject matter, and all such modifications and variations are intended to be included within the scope of the following claims.

## Claims

1. A luminescent diamond material comprising a plurality of diamond particles having at least one first defect center that luminesces at a wavelength of 880 nm to 890 nm and energy of 1.41 eV to 1.39 eV;
wherein the at least one first defect center is selected from at least one of cobalt, germanium, nickel, nitrogen and silicon;
wherein the plurality of diamond particles have a second defect center that luminesces at peak wavelength of 510 nm to 520 nm and energy of 2.43eV to 2.38eV.

2. The luminescent diamond material of claim 1, wherein the at least one defect center photoluminesces when excited with a visible, ultraviolet, or infrared light.

3. The luminescent diamond material of claim 1 or 2, further comprising a luminescent enhancer.

4. The luminescent diamond material of claim 3, wherein the luminescent enhancer is selected from at least one of boron, germanium, phosphorus, silicon and tin.

5. The luminescent diamond material of any preceding claim, wherein the diamond particles have a size less than 100 nm, 1 nm to 20 nm, 20 nm to 100 nm; or
wherein the diamond particles have a size of 0.1 µm to 1 µm, 500 nm to 30 µm or 10 µm to 100 µm.

6. The luminescent diamond material of any preceding claim, wherein the diamond particles have a plurality of defect centers, wherein the concentration of the defect centers is more than 8 ppm.

7. The luminescent diamond material of any preceding claim, wherein the material is made from a composition of material that includes a catalyst composition selected from one or more of the group of cobalt, iron, manganese and nickel, and an enhancer selected from one or more of the group of boron, germanium, phosphorous, silicon and tin.

8. The luminescent diamond material of any preceding claim, wherein the material is luminescent nano-diamond.

9. A method of producing a luminescent diamond material comprising the steps of:
providing a catalyst selected from one or more of the group of cobalt, iron, manganese and nickel;
providing an enhancer selected from one or more of the group of boron, germanium, phosphorous, silicon and tin;
providing graphite;
blending the catalyst, enhancer, and graphite to form a homogenized blend and pressing the homogenized blend into a solid compact; and
subjecting the solid compact to a high temperature, high pressure process to form a luminescent diamond material having a plurality of diamond particles having at least one first defect center, wherein the luminescent diamond material luminesces at 880 nm to 890 nm and energy of 1.41 eV to 1.39 eV;
wherein the at least one first defect center is selected from at least one of cobalt, germanium, nickel, nitrogen and silicon;
wherein the plurality of diamond particles have a second defect center that luminesces at peak wavelength of 510 nm to 520 nm and energy of 2.43eV to 2.38eV.

10. The method of claim 9, wherein the defect centers photoluminesces when excited with a ultraviolet, visible or infrared light.

11. The method of claim 9 or 10, wherein the diamond particles have a size less than 100 nm, 1 nm to 20 nm, 20 nm to 100 nm; or
wherein the diamond particles have a size of 0.1 µm to 1 µm, 500 nm to 30 µm or 10 µm to 100 µm.

12. The method of claim 11, wherein the catalyst, enhancer, and graphite are powders and the step of blending comprises blending the powders together to form a homogenized powder blend.

13. The method of claim 12, wherein the blended powder is pressed into a solid compact; and
wherein the solid compact is subjected to a pressure of 4.5 GPa to 8 GPa and a temperature of 1200 °C to 2300 °C.

## Patentansprüche

1. Lumineszierendes Diamantmaterial, das eine Vielzahl von Diamantpartikeln mit mindestens einem ersten Defektzentrum umfasst, welches bei einer Wellenlänge von 880 nm bis 890 nm und einer Energie von 1,41 eV bis 1,39 eV luminesziert; wobei das mindestens eine erste Defektzentrum aus mindestens einem von Kobalt, Germanium, Nickel, Stickstoff und Silizium ausgewählt ist;
wobei die Vielzahl von Diamantpartikeln ein zweites Defektzentrum aufweist, das bei einer Spitzenwellenlänge von 510 nm bis 520 nm und einer Energie von 2,43 eV bis 2,38 eV luminesziert.

2. Lumineszierendes Diamantmaterial nach Anspruch 1, wobei das mindestens eine Defektzentrum photoluminesziert, wenn es mit sichtbarem, ultraviolettem oder infrarotem Licht angeregt wird.

3. Lumineszierendes Diamantmaterial nach Anspruch 1 oder 2, das darüber hinaus einen Lumineszenzverstärker umfasst.

4. Lumineszierendes Diamantmaterial nach Anspruch 3, wobei der Lumineszenzverstärker aus mindestens einem von Bor, Germanium, Phosphor, Silizium und Zinn ausgewählt ist.

5. Lumineszierendes Diamantmaterial nach einem der vorhergehenden Ansprüche, wobei die Diamantpartikel eine Größe von weniger als 100 nm, 1 nm bis 20 nm, 20 nm bis 100 nm aufweisen; oder
wobei die Diamantpartikel eine Größe von 0,1 µm bis 1 µm, 500 nm bis 30 µm oder 10 µm bis 100 µm aufweisen.

6. Lumineszierendes Diamantmaterial nach einem der vorhergehenden Ansprüche, wobei die Diamantpartikel eine Vielzahl von Defektzentren aufweisen, wobei die Konzentration der Defektzentren mehr als 8 ppm beträgt.

7. Lumineszierendes Diamantmaterial nach einem der vorhergehenden Ansprüche, wobei das Material aus einer Materialzusammensetzung hergestellt ist, die eine Katalysatorzusammensetzung, die aus einem oder mehreren der Gruppe Kobalt, Eisen, Mangan und Nickel ausgewählt ist, und einen Verstärker, der aus einem oder mehreren der Gruppe Bor, Germanium, Phosphor, Silizium und Zinn ausgewählt ist, aufweist.

8. Lumineszierendes Diamantmaterial nach einem der vorhergehenden Ansprüche, wobei das Material ein lumineszierender Nanodiamant ist.

9. Verfahren zur Herstellung eines lumineszierenden Diamantmaterials, das die Schritte umfasst:
Bereitstellen eines Katalysators, der ausgewählt ist aus einem oder mehreren der Gruppe Kobalt, Eisen, Mangan und Nickel;
Bereitstellen eines Verstärkers, der ausgewählt ist aus einem oder mehreren der Gruppe Bor, Germanium, Phosphor, Silizium und Zinn;
Bereitstellen von Grafit;
Mischen des Katalysators, des Verstärkers und des Grafits, um eine homogenisierte Mischung zu bilden, und Pressen der homogenisierten Mischung zu einem festen Pressling; und
Unterziehen des festen Presslings einem Hochtemperatur- und Hochdruckverfahren, um ein lumineszierendes Diamantmaterial mit einer Vielzahl von Diamantpartikeln mit mindestens einem ersten Defektzentrum zu bilden,
wobei das lumineszierende Diamantmaterial bei 880 nm bis 890 nm und einer Energie von 1,41 eV bis 1,39 eV luminesziert;
wobei das mindestens eine erste Defektzentrum ausgewählt ist aus mindestens einem von Kobalt, Germanium, Nickel, Stickstoff und Silizium;
wobei die Vielzahl von Diamantpartikeln ein zweites Defektzentrum aufweist, das bei einer Spitzenwellenlänge von 510 nm bis 520 nm und einer Energie von 2,43 eV bis 2,38 eV luminesziert.

10. Verfahren nach Anspruch 9, wobei die Defektzentren photolumineszieren, wenn sie mit ultraviolettem, sichtbarem oder infrarotem Licht angeregt werden.

11. Verfahren nach Anspruch 9 oder 10, wobei die Diamantpartikel eine Größe von weniger als 100 nm, 1 nm bis 20 nm, 20 nm bis 100 nm aufweisen; oder wobei die Diamantpartikel eine Größe von 0,1 µm bis 1 µm, 500 nm bis 30 µm oder 10 µm bis 100 µm aufweisen.

12. Verfahren nach Anspruch 11, wobei der Katalysator, der Verstärker und der Grafit Pulver sind und der Schritt des Mischens das Zusammenmischen der Pulver umfasst, um eine homogenisierte Pulvermischung zu bilden.

13. Verfahren nach Anspruch 12, wobei das gemischte Pulver zu einem festen Pressling gepresst wird; und
wobei der feste Pressling einem Druck von 4,5 GPa bis 8 GPa und einer Temperatur von 1200 °C bis 2300 °C ausgesetzt wird.

## Revendications

1. Matériau luminescent de diamant comprenant une pluralité de particules de diamant ayant au moins un premier centre de défaut qui est luminescent à une longueur d'onde de 880 nm à 890 nm et une énergie de 1,41 eV à 1,39 eV ;
dans lequel l'au moins un premier centre de défaut est sélectionné parmi au moins l'un parmi le cobalt, le germanium, le nickel, l'azote et le silicium ;
dans lequel la pluralité de particules de diamant possèdent un deuxième centre de défaut qui est luminescent à une longueur d'onde de crête de 510 nm à 520 nm et une énergie de 2,43 eV à 2,38 eV.

2. Matériau luminescent de diamant selon la revendication 1, dans lequel l'au moins un centre de défaut est photoluminescent lorsqu'il est excité avec une lumière visible, ultraviolette ou infrarouge.

3. Matériau luminescent de diamant selon la revendication 1 ou 2, comprenant en outre un agent d'amélioration de luminescence.

4. Matériau luminescent de diamant selon la revendication 3, dans lequel l'agent d'amélioration de luminescence est sélectionné parmi au moins l'un parmi le bore, le germanium, le phosphore, le silicium et l'étain.

5. Matériau luminescent de diamant selon l'une quelconque des revendications précédentes, dans lequel les particules de diamant possèdent une taille inférieure à 100 nm, de 1 nm à 20 nm, de 20 nm à 100 nm ; ou
dans lequel les particules de diamant possèdent une taille de 0,1 µm à 1 µm, de 500 nm à 30 µm ou de 10 µm à 100 µm.

6. Matériau luminescent de diamant selon l'une quelconque des revendications précédentes, dans lequel les particules de diamant possèdent une pluralité de centres de défauts, dans lequel la concentration des centres de défaut est de plus de 8 ppm.

7. Matériau luminescent de diamant selon l'une quelconque des revendications précédentes, dans lequel le matériau est réalisé à partir d'une composition de matériau qui comporte une composition de catalyseur sélectionnée parmi l'un ou plusieurs parmi le groupe du cobalt, du fer, du manganèse et du nickel, et un agent d'amélioration sélectionné parmi l'un ou plusieurs parmi le groupe du bore, du germanium, du phosphore, du silicium et de l'étain.

8. Matériau luminescent de diamant selon l'une quelconque des revendications précédentes, dans lequel le matériau est un nanodiamant luminescent.

9. Méthode de production d'un matériau luminescent de diamant comprenant les étapes de :
la fourniture d'un catalyseur sélectionné parmi l'un ou plusieurs parmi le groupe du cobalt, du fer, du manganèse et du nickel ;
la fourniture d'un agent d'amélioration sélectionné parmi l'un ou plusieurs parmi le groupe du bore, du germanium, du phosphore, du silicium et de l'étain ;
la fourniture de graphite ;
le mélange du catalyseur, de l'agent d'amélioration et du graphite pour former un mélange homogénéisé et le pressage du mélange homogénéisé en un compact solide ; et
la soumission du compact solide à un procédé à haute température et à haute pression pour former un matériau luminescent de diamant ayant une pluralité de particules de diamant ayant au moins un premier centre de défaut, dans laquelle le matériau luminescent de diamant est luminescent de 880 nm à 890 nm et à une énergie de 1,41 eV à 1,39 eV ;
dans laquelle l'au moins un premier centre de défaut est sélectionné parmi au moins l'un parmi le cobalt, le germanium, le nickel, l'azote et le silicium ;
dans laquelle la pluralité de particules de diamant possèdent un deuxième centre de défaut qui est luminescent à une longueur d'onde de crête de 510 nm à 520 nm et une énergie de 2,43 eV à 2,38 eV.

10. Méthode selon la revendication 9, dans laquelle le centre de défaut est photoluminescent lorsqu'il est excité avec une lumière ultraviolette, visible ou infrarouge.

11. Méthode selon la revendication 9 ou 10, dans laquelle les particules de diamant possèdent une taille inférieure à 100 nm, de 1 nm à 20 nm, de 20 nm à 100 nm ; ou
dans laquelle les particules de diamant possèdent une taille de 0,1 µm à 1 µm, de 500 nm à 30 µm ou de 10 µm à 100 µm.

12. Méthode selon la revendication 11, dans laquelle le catalyseur, l'agent d'amélioration et le graphite sont des poudres et l'étape de mélange comprend le mélange des poudres entre elles pour former un mélange en poudre homogénéisé.

13. Méthode selon la revendication 12, dans laquelle la poudre mélangée est pressée en un compact solide ; et
dans laquelle le compact solide est soumis à une pression de 4,5 GPa à 8 GPa et une température de 1 200 °C à 2 300 °C.
